Europäisches Patentamt

European Patent Office

Office européen des brevets

(11) Publication number: **0 493 921 A1**

# EUROPEAN PATENT APPLICATION

(21) Application number: **91311650.5**

(22) Date of filing: **16.12.91**

(51) Int. Cl.5: **F16K 1/22**

(30) Priority: **04.01.91 GB 9100107**

(43) Date of publication of application:
**08.07.92 Bulletin 92/28**

(84) Designated Contracting States:
**DE ES FR GB IT NL**

(71) Applicant: **BTR plc**
**Silvertown House Vincent Square**
**London SW1P 2PL(GB)**

(72) Inventor: **Haseley, Philip John**
**10 The Spinney, Church Aston**
**Newport, Shropshire(GB)**

(74) Representative: **Treves, Barry William et al**
**BTR Group Patent & Trade Mark Service P.O.**
**Box 504**
**Erdington Birmingham B24 9OH(GB)**

(54) **Valve disc and drive shaft assembly.**

(57) The drive shaft (16) is formed with an off-set projection (32) at one end and is located in a blind bore (26) formed at the disc edge, the bore (26) having a recess (28) for receiving the projection (32). The mating parts are readily made by conventional machining techniques and there is no need to pierce the disc.

Fig. 1

EP 0 493 921 A1

This invention relates to a valve disc and drive shaft assembly particularly for a butterfly valve.

In a known form of butterfly valve, the disc is cast to its general shape and then a diametrically arranged bore is formed by drilling. This bore extends across the whole diameter of the disc and receives the drive shaft by means of which the disc is rotated to open or close the valve. To prevent the shaft rotating in the bore one or more pins are provided radially with respect to the shaft axis and inserted through holes in the disc into blind apertures on the shaft.

However, it has been found that sometimes the joint between a pin and a disc is not properly formed or becomes damaged and leakage occurs either through the disc from one side to the other, or from the interior to the exterior of the valve along a leakage path alongside the drive shaft.

One way of avoiding piercing the disc is to use a shaft of non-circular cross-section, e.g. square cross-section, in a correspondingly-shaped bore. However such bore shapes are relatively difficult and expensive to provide in practice with the required degree of accuracy by relatively simple machining techniques.

It is an object of the present invention to provide a valve disc and drive shaft assembly with a relatively simple and cheap means for non-rotatably securing the disc to the shaft without providing a leakage path.

In accordance with the present invention, a valve disc and drive shaft assembly comprises a disc formed with a blind bore of circular cross-section extending radially inwards from the disc periphery and a shaft of circular cross-section located in said bore having a diameter substantially equal to that of the bore, the end of the shaft or the base of the bore being provided with a projection extending parallel to but offset from the shaft rotational axis and fitting in a corresponding recess provided at the base of the bore or the end of the shaft respectively.

Preferably the projection and recess are circular in cross-section for ease of manufacture i.e. by drilling. The projection may be integral with the shaft or formed separately from the shaft or base and be an interference fit in a recess formed in the end of the shaft or base of the bore respectively. Two or more projections and corresponding recesses may be provided, each offset from a central rotational axis shaft.

One embodiment of the invention will now be described by way of example with reference to the accompanying drawings of which:-

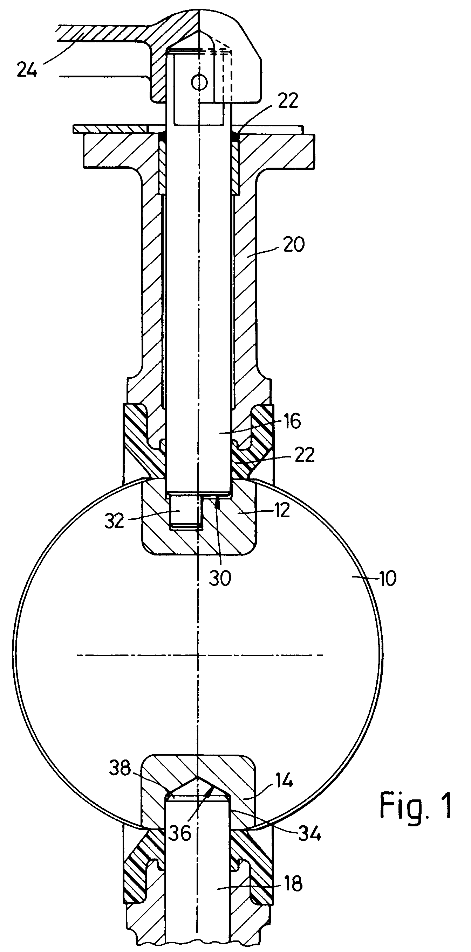

Figure 1    is a general cross-sectional view of the valve disc and drive shaft assembly and associated valve components;

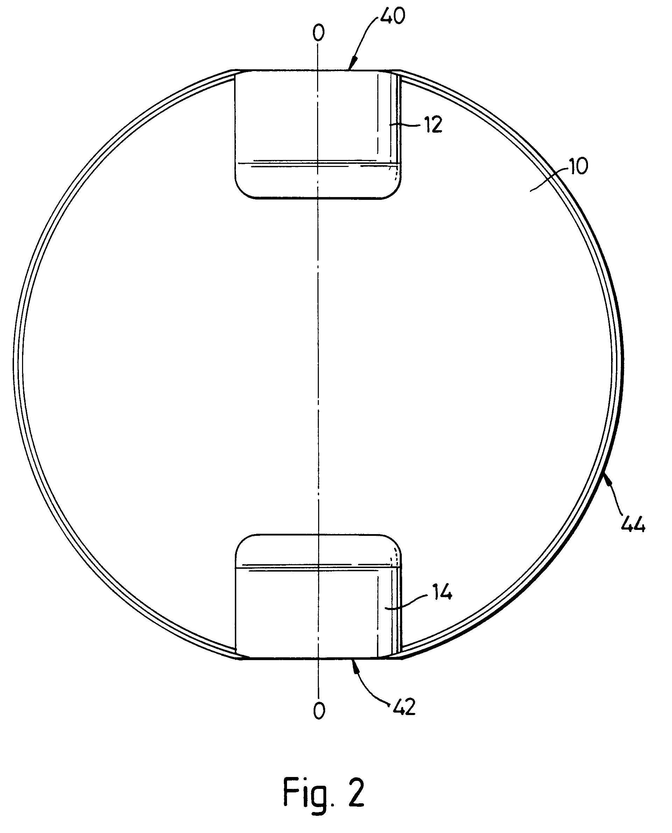

Figure 2    is a side view of the valve disc;

Figure 3    is a plan view of the valve disc shown in Figure 2;

Figure 4    is a cross-sectional view of the valve disc shown in Figure 2;

Figure 5    is a perspective view of half of the upper socket of the valve disc; and

Figure 6    is an exploded view of half of the lower end of the drive shaft and the upper socket of a modified form of the assembly shown in Figure 1.

As can be seen in the drawings the valve comprises a central valve disc 10, an upper socket 12 and a lower socket 14, all cast as a single unit and then subsequently machined to its final shape, an upper drive shaft 16 and a lower supporting shaft 18.

The upper drive shaft 16 is housed in a conventional tubular housing 20 in the body of the valve and is provided with seals 22 in a conventional manner. Details of this will not be given because they are not relevant to the present invention. A handle 24 is provided at the upper end of the drive shaft 16 in order that the valve may be opened and closed.

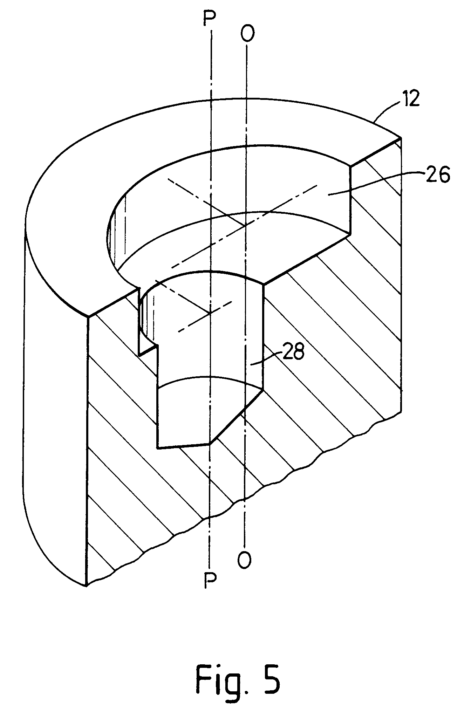

The upper socket 12 of the valve disc 10, shown particularly in Figure 5, is provided with a shallow main bore 26, accurately machined to the required size and shape and, in the base of the main bore, a secondary bore 28 having a diameter less than that of the main bore. The secondary bore 28 is eccentrically disposed with respect to the main bore, the central axis 0-0 of the main bore passing through the secondary bore but being displaced from the central axis P-P of the secondary bore 28. The secondary bore 28 is spaced radially inwardly from the periphery of the main bore 26.

The end 30 of the drive shaft 16 is accurately machined so that it is generally at right angles to the shaft axis 0-0 so that it locates in the main bore 26 of the upper socket 12 so that the shaft axis 0-0 is in alignment with the axis of the main bore. Protruding from the end of the shaft is a cylindrical projection 32 having a diameter substantially the same as but slightly less than that of the secondary bore 28 at the base of the main bore 26 in the upper socket 12. This projection 32 is a tight sliding fit in the secondary bore 28, being positioned so that it is correspondingly offset from the main rotational axis 0-0 of the drive shaft 16.

Diametrically opposite the upper socket 12 of the valve disc 10 is a lower socket 14 formed with a shallow bore 34 and having a conical base 36 formed by a drilling operation. This bore 34 formed in the lower socket receives the upper end of the lower supporting shaft 18. The lower supporting shaft 18 and the lower socket act as a bearing for the valve disc. The bore 34 in the lower socket 14 and the upper end of the supporting shaft 18 accurately locate the valve disc 10 in the required position in the valve.

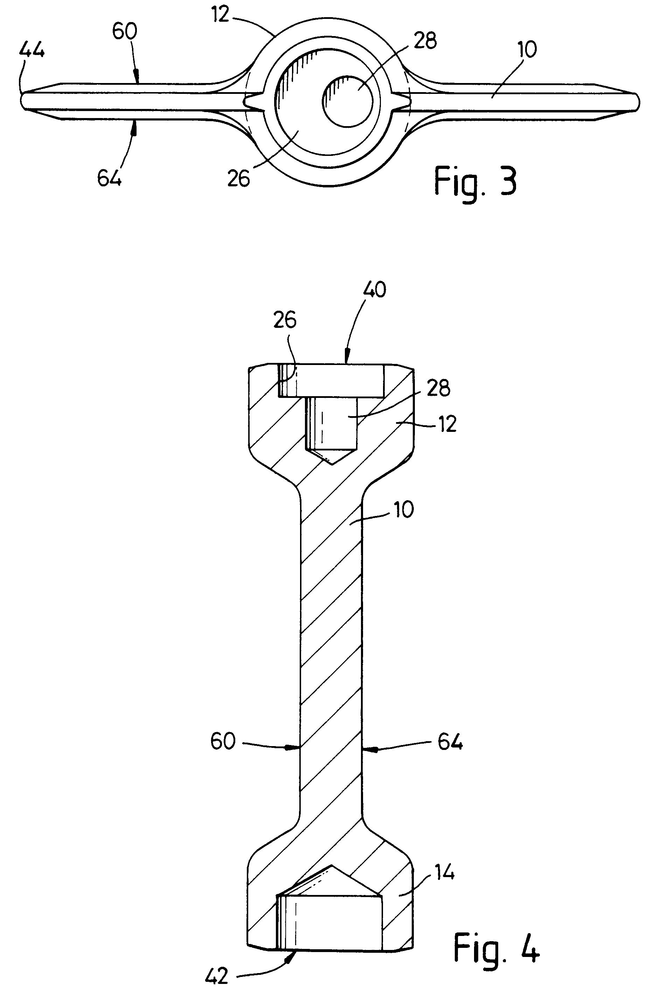

Adjacent the upper and lower sockets the periphery of the valve disc is formed with two flat surfaces 40, 42 in a conventional manner and the remaining generally semi-circular parts of the periphery of the valve disc are machined to have a generally semi-circular cross-section as shown particularly at 44 in Figure 3 to provide sealing engagement with a rubber seal formed within the bore of the main valve (not shown).

As a first modification to the present invention the projection on the end face of the drive shaft is not integrally formed therewith but is in the form of a separate pin which is an interference fit in an appropriately shaped recess formed in the end face of the shaft.

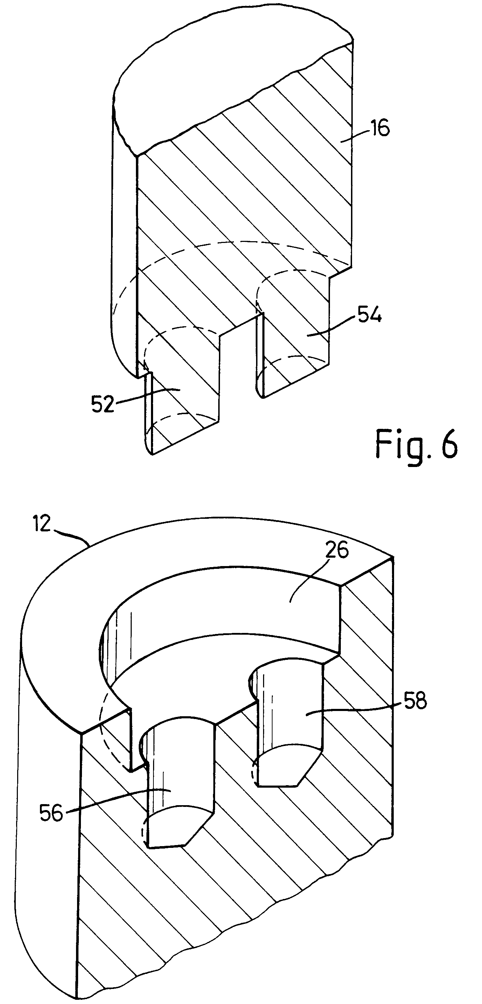

In a second modification shown in Figure 6 the single projection 32 is replaced by two (or more) projections 52, 54, each offset from the central rotational axis 0-0 of the drive shaft 16 and each fitting in correspondingly positioned and shaped secondary bores 56, 58. The projections 52, 54 may be provided on the end of the shaft 16 and the secondary bores 56, 58 at the base of the main bore 26 in the upper socket 12.

Since the valve disc is not pierced in any way on either of its main surfaces 60, 64 the likelihood of any leakage occurring from one side of the disc to the other or to the the exterior of the valve along the surface of the drive shaft 16 is eliminated.

## Claims

1. A valve disc (10) and drive shaft (16) assembly characterised by comprising a disc formed with a blind bore (26) of circular cross-section extending radially inwards from the disc periphery and a shaft (16) of circular cross-section located in said bore (26) having a diameter substantially equal to that of the bore (26), the end of the shaft (16) or the base of the bore (26) being provided with a projection (32) extending parallel to but offset from the shaft rotational axis and fitting in a corresponding recess (28) provided at the base of the bore (26) or the end of the shaft (16) respectively.

2. An assembly according to Claim 1 characterised in that the projection (32) and recess (28) are circular in cross-section.

3. An assembly according to either Claim 1 or Claim 2 characterised in that the projection (32) is integral with the shaft (16) and is an interference fit in the recess (28).

4. An assembly according to either Claim 1 or Claim 2 characterised in that the projection (32) is formed separately from the shaft (16) or base and is an interference fit in the recess (28) formed at the base of the bore (26) or end of the shaft (16) respectively.

5. An assembly according to any one of the preceding claims, characterised in that two or more projections (52,54) and corresponding recesses (56,58) are provided, each offset from a central rotational axis of the shaft.

Fig. 1

Fig. 2

44  60  12  28  10

Fig. 3

64  26

40

26  28  12

10

60  64

14

42  Fig. 4

Fig. 5

16

54

52

Fig. 6

12

26

58

56

European Patent Office

**EUROPEAN SEARCH REPORT**

Application Number

EP 91 31 1650

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 019 496 (GACHOT)<br>* page 6, line 7 - line 13; figure 2 *<br>--- | 1,3 | F16K1/22 |
| A | FR-A-2 511 743 (KLEIN,SCHANZLIN & BECKER AG.)<br>* page 5, line 16 - line 24; figure 2 *<br>--- | 1 | |
| A | EP-A-0 069 491 (GROVE VALVE AND REGULATOR CO.)<br>* figure 1 *<br><br>----- | 1,2,4,5 | |
| | | | TECHNICAL FIELDS SEARCHED (Int. Cl.5) |
| | | | F16K |

The present search report has been drawn up for all claims

| Place of search | Date of completion of the search | Examiner |
|---|---|---|
| THE HAGUE | 14 APRIL 1992 | CHRISTENSEN J.T. |